# EUROPÄISCHE PATENTSCHRIFT

(11) **EP 3 382 823 B1**
(45) Veröffentlichungstag und Bekanntmachung des Hinweises auf die Patenterteilung: **01.05.2019**
(21) Anmeldenummer: 17163096.5
(22) Anmeldetag: 27.03.2017
(51) Int. Cl.: H01R 25/16, H02B 1/21, H01R 101/00, H01R 9/24, H01R 13/502

(54) **EINRICHTUNG ZUM EINSPEISEN VON STROM, INSBESONDERE NOTSTROM, IN EIN ELEKTRISCHES SAMMELSCHIENENSYSTEM**
DEVICE FOR FEEDING POWER, IN PARTICULAR EMERGENCY POWER, INTO AN ELECTRICAL BUSBAR SYSTEM
DISPOSITIF D'INJECTION DE COURANT, EN PARTICULIER EN COURANT DE SECOURS, D'UN SYSTÈME DE BARRE OMNIBUS ÉLECTRIQUE

(43) Veröffentlichungstag der Anmeldung: 03.10.2018
(73) Patentinhaber: Jean Müller GmbH Elektrotechnische Fabrik, 65343 Eltville (DE)
(72) Erfinder: Wolf, Torsten, 65366 Geisenheim (DE)
(74) Vertreter: Quermann, Helmut

(56) Entgegenhaltungen:
- EP-A1- 2 980 932
- DE-A1- 10 061 940
- DE-C1- 3 405 386

## Beschreibung

Die Erfindung betrifft eine Einrichtung zum Einspeisen von Strom, insbesondere von Notstrom, in ein elektrisches Sammelschienensystem.

Das Einspeisen von Strom, insbesondere das Einspeisen von Notstrom, in ein elektrisches Sammelschienensystem ist in aller Regel recht zeitaufwendig und erfordert besondere Maßnahmen unter dem Aspekt der Einhaltung der Regeln für das Arbeiten unter Spannung bzw. in der Nähe spannungsführender Teile . Hierbei ist in aller Regel zweckmäßig, eine möglichst hohe IP-Schutzart einzuhalten.

Aus der Praxis ist es bekannt, bei Sammelschienensystemen an der jeweiligen Sammelschiene direkt eine Lasche anzuschrauben und ein Kontaktelement z.B. eine Steckvorrichtung an der Lasche zu befestigen. Dieses Kontaktelement kann dann mit einem komplementären Kontaktelement , insbesondere eines Notstromaggregats, verbunden werden, sodass über diese Anordnung von Kontaktelement und komplementärem Kontaktelement der jeweiligen Sammelschiene Strom zugeführt werden kann.

Eine Einrichtung zum Einspeisen von Strom in ein elektrisches Sammelschienensystem, wobei dieser Einrichtung die Merkmale des Oberbegriffs des Patentanspruchs 1 aufweist, ist aus der EP 2 980 932 A1 bekannt. Bei dieser ist ein, die Funktion eines Trägerteils aufweisender Grundkörper vorgesehen. Berührungsschienen haben eine abgewinkelte Form und bilden damit Einspeisewinkel, die mit Sammelschienen des Sammelschienensystems verbindbar sind. Die Einspeisewinkel sind in dem Trägerteil gelagert und durchsetzen dieses. Berührungsschutzhauben, die als integrales Teil ausgebildet sein können, besitzen die Funktion einer Abdeckplatte, die mit dem Trägerteil verbunden ist, zum Abdecken des Trägerteils auf dessen den Sammelschienen abgewandter Seite. Die Anschlüsse der Kabel an die Einspeisewinkel erfolgt durch Schrauben, Klemmen, Schweißen oder Löten. Zum Verbinden der Einspeisewinkel mit der Stromschiene wird die Abdeckplatte abgenommen.

Aufgabe der vorliegenden Erfindung ist es, eine Einrichtung zum Einspeisen von Strom, insbesondere von Notstrom, in ein elektrisches Sammelschienensystem zu schaffen, die baulich besonders einfach gestaltet ist und eine einfache und sichere Handhabung zum Herbeiführen der Einspeisung ermöglicht.

Gelöst wird die Aufgabe durch eine Einrichtung, die gemäß den Merkmalen des Patentanspruchs 1 ausgebildet ist.

Die Einrichtung weist folgende Merkmale auf:
- ein Trägerteil,
- Einspeisewinkel, die mit Sammelschienen des Sammelschienensystems verbindbar sind, wobei die Einspeisewinkel in dem Trägerteil gelagert sind und dieses durchsetzen,
- eine Abdeckplatte, die mit dem Trägerteil verbunden ist, zum Abdecken des Trägerteils auf dessen den Sammelschienen abgewandter Seite, wobei die Einspeisewinkel die Abdeckplatte durchsetzen,
- einpolige Steckvorrichtungen, die mit den Einspeisewinkeln im Bereich deren den Sammelschienen abgewandten Enden, auf der dem Trägerteil abgewandten Seite der Abdeckplatte, verbunden sind,
- Abdeckhauben für die Steckvorrichtungen und die Einspeisewinkel, wobei die Abdeckhauben auf der dem Trägerteil abgewandten Seite der Abdeckplatte angeordnet und mit dieser verbunden sind,
- Durchgänge in der Abdeckplatte und dem Trägerteil zum Durchstecken von Befestigungsmitteln, die dem Verbinden von Einspeisewinkeln und Sammelschienen dienen.

Aufgrund dieser Ausbildung der Einrichtung ist diese weitreichend für den Zweck der Einspeisung von Strom in ein elektrisches Sammelschienensystem vormontiert und es ist nur erforderlich, mittels der Befestigungsmittel die Einspeisewinkel und die Sammelschienen zu verbinden.

Vorzugsweise handelt es sich bei den Befestigungsmitteln um Befestigungsschrauben. Diese werden vorzugsweise durch fluchtende Durchgangslöcher von jeweiligem Einspeisewinkel und zugeordneter Sammelschiene gesteckt und in eine Mutter eingeschraubt oder aber unmittelbar die Befestigungsschrauben nach Durchstecken durch die Einspeisewinkel in Gewindebohrungen der Sammelschienen eingeschraubt.

Es kann somit ein Notstromaggregat über dessen Stromkabelabgänge mit den jeweils vorgesehenen einpoligen Steckvorrichtungen gekuppelt werden, über die dann der Strom in die Sammelschienen des Sammelschienensystems eingeleitet wird. Die mit dem Trägerteil zusammenwirkende Abdeckplatte deckt im Wesentlichen die Einspeisewinkel ab und es decken die Abdeckhauben die Steckvorrichtungen und die Verbindungsbereiche von Steckvorrichtungen und Einspeisewinkeln ab. Hierdurch kann mit geringem baulichem Aufwand die Schutzart IP20 und im unmittelbaren Bereich der Steckvorrichtungen die Schutzart IP 4X gewährleistet werden.

Vorzugsweise ist die Einrichtung als modulare Einheit ausgebildet. Die Einrichtung lässt sich besonders einfach aus standardisierten Bauteilen zusammenbauen, insbesondere solchen Bauteilen, die im Bereich der Stromverteilung Verwendung finden. So kann insbesondere ein Trägerteil Verwendung finden, das üblicherweise als aus Kunststoff bestehendes Trägerunterteil für NH- Sicherungsleisten oder NH-Sicherungslastschaltleisten ausgebildet ist, wobei dieses Trägerunterteil über Kontaktschienen mit den Sammelschienen eines Sammelschienensystems verbindbar ist.

Bei der Einrichtung weist der jeweilige Einspeisewinkel vorzugsweise einen Z-förmigen Abschnitt und einen Winkelabschnitt auf. Der Z-förmige Abschnitt durchsetzt einen diesem Einspeisewinkel zugeordneten Durchgang des Trägerteils. Der Z-förmige Abschnitt und/oder der Winkelabschnitt durchsetzt einen zugeordneten Durchgang der Abdeckplatte. Diese Gestaltung des jeweiligen Einspeisewinkels benötigt relativ wenig Bauraum und stellt eine sichere Stromübertragung von der jeweiligen Sammelschiene zur zugeordneten einpoligen Steckvorrichtung sicher. Hierbei durchsetzt der jeweilige Einspeisewinkel diesem zugeordnete Durchgänge im Trägerteil und in der Abdeckplatte.

Der Z-förmige Abschnitt des jeweiligen Einspeisewinkels ist vorzugsweise derart ausgebildet, dass die drei Teilabschnitte des Z-förmigen Abschnitts jeweils unter einem Winkel von 90° zueinander angeordnet sind. Der Winkelabschnitt weist vorzugsweise einen Teilabschnitt auf, der unter einem Winkel von 30° bis 60° zum angrenzenden Teilabschnitt des Z-förmigen Abschnitts positioniert ist. Dies ermöglicht bei einem standardisiertem Trägerteil ein optimales Durchstecken des Winkelabschnitts durch das Trägerteil bei günstiger Winkelpositionierung und Anordnung der diesem Einspeisewinkel zugeordneten Steckvorrichtung.

Es ist insbesondere vorgesehen, dass ein weiterer Einspeisewinkel für einen Neutralleiter in der Abdeckplatte oder dem Trägerteil gelagert ist, sowie mit den weiterem Einspeisewinkel eine weitere Steckvorrichtung verbunden ist und eine weitere Abdeckhaube die weitere Steckvorrichtung und den weiteren Einspeisewinkel abdeckt. Da dieser weitere Einspeisewinkel nicht in einer Sammelschiene gelagert ist, erfolgt dessen Lagerung in der Abdeckplatte oder in dem Trägerteil. Vorzugsweise erfolgt die Lagerung in der Abdeckplatte.

Insbesondere ist der weitere Einspeisewinkel derart positioniert, dass er einen weiteren Durchgang der Abdeckplatte durchsetzt. Die Abdeckplatte weist somit bei dieser Weiterbildung vier Durchgänge für Einspeisewinkel auf, wobei drei Einspeisewinkel die drei Außenleiter bilden und der vierte, weitere Einspeisewinkel den Neutralleiter bildet.

Insbesondere ist vorgesehen, dass die weitere Abdeckhaube auf derselben Seite der Abdeckplatte angeordnet ist, wie die den Sammelschienen der Außenleiter zugeordneten Abdeckhauben, sowie die weitere Abdeckhaube mit der Abdeckplatte verbunden ist. Alle Abdeckhauben und damit die von diesen abgedeckten Steckvorrichtungen sind somit einfach und auf gleiche Art und Weise zugänglich, zum Einstecken von komplementären Steckvorrichtungen, insbesondere komplementären Steckvorrichtungen eines Notstromaggregats, in die Steckvorrichtungen der Einrichtung zum Einspeisen von Strom.

Es wird als besonders vorteilhaft angesehen, wenn die jeweilige Steckvorrichtung als Steckbuchse ausgebildet ist. Die Abgangskabel eines Notstromaggregats sind somit endseitig mit Steckern versehen, die in die Steckbuchsen der Einrichtung zum Einspeisen von Strom eingesteckt werden.

Es wird außerdem als vorteilhaft angesehen, wenn die Steckvorrichtung des Neutralleiters abweichend zu den Steckvorrichtungen der Außenleiter als Stecker ausgebildet ist. Das Neutralleiter-Abgangskabel eines Notstromaggregats ist somit endseitig mit einer Steckbuchse versehen, die in den Stecker für den Neutralleiter der Einrichtung zum Einspeisen von Strom eingesteckt wird. Damit wird eine Vertauschung des Neutralleiters mit dem Außenleiter verhindert.

Grundsätzlich sollten somit die Steckvorrichtungen der Außenleiter abweichend der Steckverbindung des Neutralleiters ausgebildet sein, somit die Steckverbindungen des Außenleiters männlich und die Steckverbindung des Neutralleiters weiblich, oder umgekehrt.

Sowohl die Stecker als auch die Steckbuchsen sind so ausgebildet, dass diese einen Schutz gegen Berühren spannungsführender Teile in der Schutzart IP2X und in Verbindung mit den jeweiligen Steckvorrichtungen zugeordneten Abdeckhauben die Schutzart IP4X erfüllen.

Insbesondere ist die jeweilige Steckvorrichtung mittels eines in der jeweiligen Abdeckhaube schwenkbar gelagerten Deckels verschließbar. Bevorzugt steht dieser Deckel unter Federvorspannung und spannt den Deckel in seine Schließstellung gegen die Abdeckhaube vor.

Insbesondere ist vorgesehen, dass die jeweilige Abdeckhaube zwei Öffnungen aufweist, wobei die eine Öffnung, bei Verbindung der Abdeckhaube mit der Abdeckplatte, umlaufend mittels der Abdeckplatte abgedeckt ist, und die Steckvorrichtung, , den lichten Querschnitt der anderen Öffnung durchsetzt. Unter dem Aspekt der Stromführung räumlich durch die Abdeckhaube weist diese insbesondere nur die beiden genannten Öffnungen auf. Hierbei sind etwaige weitere Öffnungen der Abdeckhaube, die dem Lagern eines Deckels oder dem Befestigen der Abdeckhaube dienen, nicht berücksichtigt.

Vorzugsweise ist die jeweilige Abdeckhaube mit dieser zugeordneter Steckvorrichtung als Wandsteckdose ausgebildet, insbesondere als Wandsteckdose mit federvorgespanntem Verschlussdeckel ausgebildet. Eine solche Abdeckhaube einer Wandsteckdose ist im Handel als Standardbauteil vorhanden und kann als Baueinheit bei der Einrichtung zum Einspeisen von Strom Verwendung finden. Statt die Abdeckhaube der Wandsteckdose an der Wand zu befestigen, wird die Abdeckhaube mit der Abdeckplatte verbunden, insbesondere mit dieser verschraubt und mit der Steckvorrichtung in einer der beiden Öffnungen durchsetzt.

Mit der jeweiligen Steckvorrichtung ist vorzugsweise ein Mikroschalter elektrisch verbunden. Die mit den Steckvorrichtungen verbundenen Mikroschalter sind, in Reihe geschaltet, mit einem Auslöser eines Leistungsschalters verbunden, derart, dass, beim Einstecken oder Herausziehen einer der Steckvorrichtungen unter Last, der Leistungsschalter die Einrichtung zum Einspeisen von Strom ausschaltet. Der jeweilige Mikroschalter ist vorzugsweise an der zugeordneten Steckvorrichtung angebracht.

Der jeweilige Einspeisewinkel ist insbesondere elektrisch leitend mit einer Synchronisationsbuchse verbunden, zum Anschluss an ein elektrisches Messgerät. Insbesondere verbinden kurzschlussfeste Leitungen die Einspeisewinkel mit den Synchronisationsbuchsen und ermöglichen derart einen Spannungsabgriff.

Vorzugsweise weist die jeweilige Steckvorrichtung, insbesondere die jeweilige Steckbuchse, einen als Gewindebolzen ausgebildeten Abgang auf, der drehgesichert von dem zugeordneten Einspeisewinkel aufgenommen ist. Insbesondere sind alle Steckvorrichtungen in derselben Drehposition positioniert.

Weitere Merkmale der Erfindung sind in den Unteransprüchen, der Beschreibung der nachfolgenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines Ausführungsbeispiels dargestellt, ohne auf dieses beschränkt zu sein. Es zeigt:
- Fig. 1: die Einrichtung zum Einspeisen von Notstrom in ein elektrisches Sammelschienensystem, in einem mit den Sammelschienen verbundenen Zustand, in einer perspektivischen Darstellung, schräg von oben gesehen,

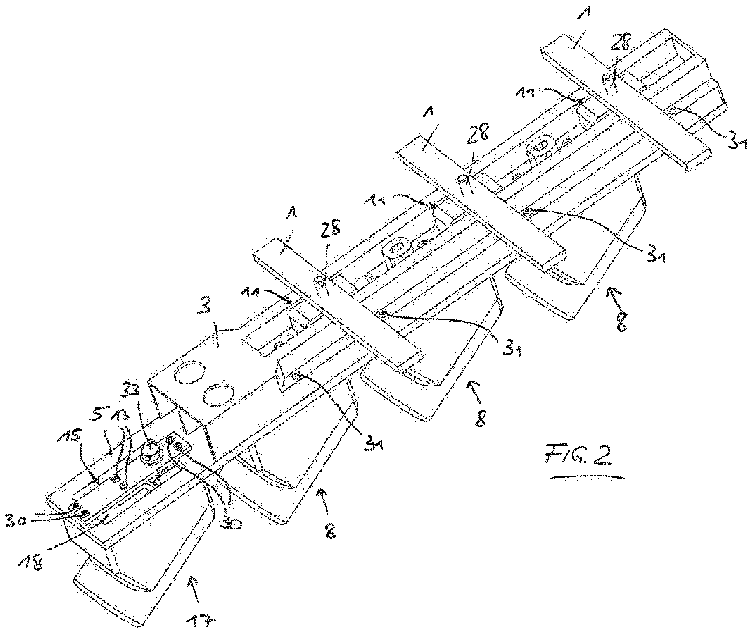

- Fig. 2: die Anordnung gemäß Fig. 1, schräg von unten gesehen,

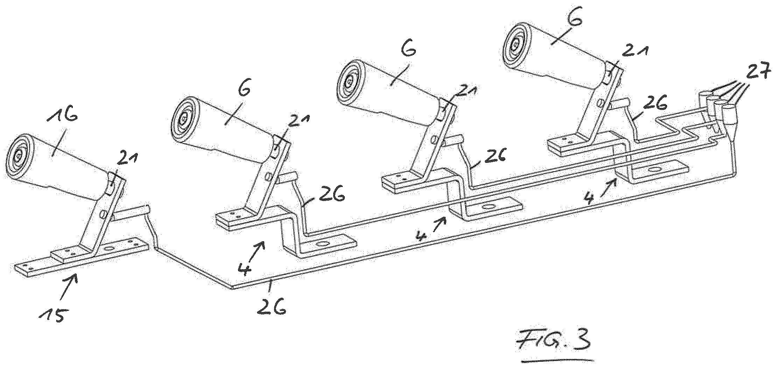

- Fig. 3: in einer räumlichen Darstellung einen Teilbereich der Einrichtung, nämlich Einspeisewinkel und Steckbuchsen der Einrichtung sowie Spannungsabgriffe an den Einspeisewinkeln und den Spannungsabgriffen zugeordnete Synchronisationsbuchsen,

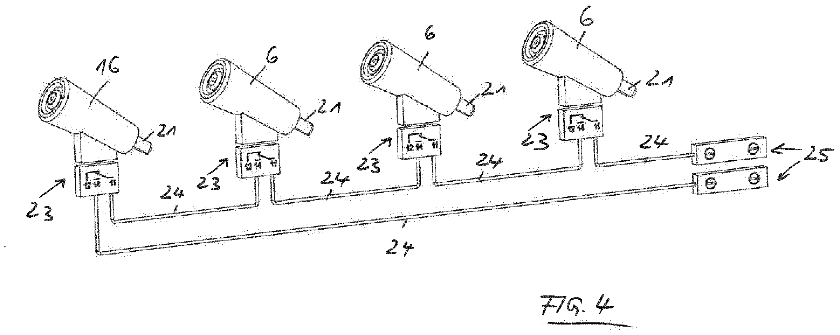

- Fig. 4: einen Teilbereich der Einrichtung, nämlich deren Steckbuchsen und mit diesen verbundene, in Reihe geschaltete Mikroschalter nebst Klemmanschlüssen,

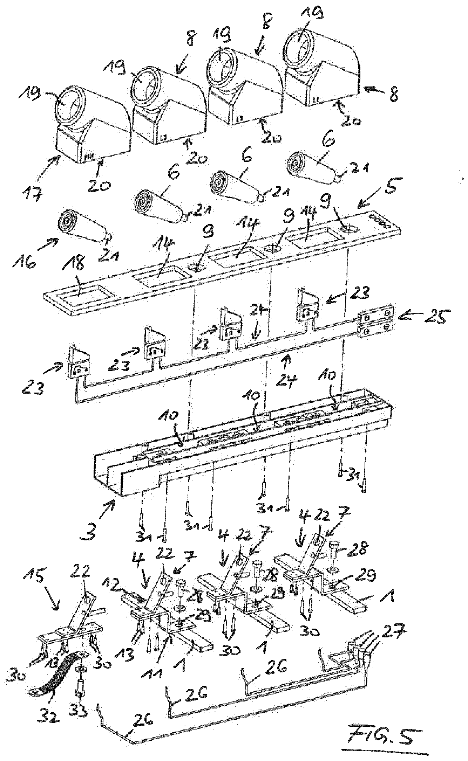

- Fig. 5: die Anordnung gemäß Fig. 1 in einer Explosionsdarstellung.

Ein elektrisches Sammelschienensystem weist drei Sammelschienen 1 auf. Mit diesen drei Leitern wird eine Einrichtung 2 zum Einspeisen von Strom, insbesondere Notstrom in das Sammelschienensystem mechanisch und elektrisch leitend verbunden.

Die Einrichtung 2 weist ein Trägerteil 3 und drei Einspeisewinkel 4, die Außenleiter bilden, auf. Diese Einspeisewinkel 4 sind mit den Sammelschienen 1 verbindbar. Die Einspeisewinkel 4 sind in dem Trägerteil 3 gelagert und durchsetzen dieses. Die Einrichtung 2 weist ferner eine Abdeckplatte 5 auf, die mit dem Trägerteil 3 verbunden ist. Die Abdeckplatte 5 dient dem Abdecken des Trägerteils 3 auf dessen den Sammelschienen 1 abgewandter Seite. Hierbei durchsetzen die Einspeisewinkel 4 die Abdeckplatte 5. Die Einrichtung 2 weist ferner einpolige Steckvorrichtungen 6 auf, die als Steckbuchsen 6 ausgebildet sind. Die Steckbuchsen 6 sind mit den Einspeisewinkeln 4 im Bereich deren den Sammelschienen 1 abgewandten Enden 7, auf der dem Trägerteil 3 abgewandten Seite der Abdeckplatte 5 verbunden.

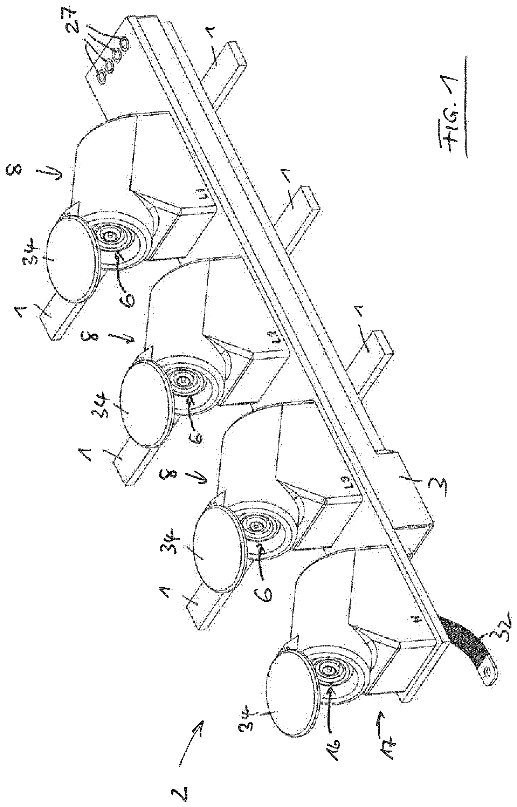

Die Einrichtung 2 weist ferner Abdeckhauben 8 für die Steckbuchsen 6 und die Einspeisewinkel 4 auf. Hierbei sind die Abdeckhauben 8 auf dem Trägerteil 3 abgewandten Seite der Abdeckplatte 5 angeordnet und mit dieser verbunden. Die jeweilige Abdeckhaube 8 ist mittels eines Deckels 34 verschließbar, der mittels einer Feder in seine Schließstellung vorgespannt ist. Die Deckel 34 sind, wegen der besseren Übersichtlichkeit, nur in der Fig. 1 gezeigt.

Drei Durchgänge 9 in der Abdeckplatte 5 und drei Durchgänge 10 in dem Trägerteil 3 dienen dem Durchstecken von Befestigungsmitteln zwecks Verbinden von Einspeisewinkeln 4 und Sammelschienen 1. Bei dem jeweiligen Befestigungsmittel handelt es sich insbesondere um eine Schraube 28, die durch ein Loch 29 im Einspeisewinkel 4 und ein Loch in der zugeordneten Sammelschiene 1 gesteckt sowie in eine nicht veranschaulichte, an der Rückseite der Sammelschiene 1 anliegende Mutter eingeschraubt wird, sodass beim Anziehen der jeweiligen Schraube 28 eine feste mechanische Verbindung von Einrichtung 2 und Sammelschienen 1 gewährleistet ist, bei gleichzeitiger elektrischer Kontaktierung der Einspeisewinkel 4 und der Sammelschienen 1. Anstelle der Schraube 28 kann auch ein anderes bekanntes, nicht veranschaulichtes, Verbindungselement eingesetzt werden, zum Beispiel eine Klemme zum mechanischen Verbinden der Einspeisewinkel 4 mit den Sammelschienen 1.

Die beschriebene Einrichtung 2 bildet eine modulare Einheit. Sie wird aus möglichst weitreichend standardisierten Bauteilen zusammengesetzt.

Der jeweilige Einspeisewinkel 4 weist einen Z-förmigen Abschnitt 11 und einen Winkelabschnitt 12 auf. Der Z-förmige Abschnitt 11 durchsetzt den jeweiligen, diesem Einspeisewinkel 4 zugeordneten Durchgang 10 des Trägerteils 3 und es durchsetzt der Winkelabschnitt 12 einen zugeordneten Durchgang 14 der Abdeckplatte 5. Die Durchgänge 10 bzw. 14 besitzen, senkrecht zu einer durch die Sammelschienen 1 gebildeten Ebene gesehen, einen rechteckigen Querschnitt, wobei die Durchgänge 10 und 14 bei montierter Einrichtung 2 teilweise miteinander fluchten.

Die Einrichtung 2 weist einen weiteren Einspeisewinkel 15 für einen Neutralleiter 32 auf, wobei der weitere Einspeisewinkel 15 in der Abdeckplatte 5 gelagert ist. Mit dem weiteren Einspeisewinkel 15 ist eine weitere Steckvorrichtung 16 verbunden, die als einpoliger Stecker 6 ausgebildet ist. Eine weitere Abdeckhaube 17, die genauso wie die Abdeckhaube 8 ausgebildet ist, deckt die weitere Steckvorrichtung 16 und den weiteren Einspeisewinkel 15 ab, genauso wie die jeweilige Abdeckhaube 8 abdeckt. Der weitere Einspeisewinkel 15 durchsetzt einen weiteren Durchgang 18 in der Abdeckplatte 5. Dieser Durchgang 18 ist genauso gestaltet wie der jeweilige Durchgang 14. Die weitere Abdeckhaube 17 ist auf derselben Seite der Abdeckplatte 5 angeordnet wie die den Sammelschienen 1 zugeordneten Abdeckhauben 8. Die weitere Abdeckhaube 17 ist, genauso wie die Abdeckhauben 8, mit der Abdeckplatte 5 verbunden, insbesondere mit der Abdeckplatte 5 verschraubt.

Bei den Steckvorrichtungen 6, den Abdeckhauben 8 und der Abdeckhaube 17 sowie den Deckeln 34 handelt es sich jeweils um identische Bauteile, zudem bei den Steckvorrichtungen 6 und 16, den Abdeckhauben 8 und 17 sowie den Deckeln 34 jeweils um standardisierte Bauteile, wie sie beispielsweise im Handel als Wandsteckdosen erhältlich sind, insbesondere als Wandsteckdosen mit federvorgespanntem Verschlussdeckel zum Verschließen der kreisförmigen Öffnung 19 der jeweiligen Abdeckhaube 8 bzw. 17 in dem Bereich der Steckvorrichtung 6 bzw. 16, in dem eine komplementäre Steckvorrichtung des Notstromaggregats eingesteckt wird.

Die Abdeckhauben 8 und 17 sind derart gestaltet, dass sie die Schutzart IP 44 erfüllen können.

Die Steckvorrichtungen 6 bzw. 16 durchsetzen den lichten Querschnitt der Öffnung 19. Die untere Öffnung 20 der jeweiligen Abdeckhaube 8 bzw. 17 ist, bei Verbindung der jeweiligen Abdeckhaube 8 bzw. 17, umlaufend mittels der Abdeckplatte 5 abgedeckt.

Damit die Steckvorrichtungen 6 bzw. 16 eine identische Einsteckposition bezüglich der komplementären Steckvorrichtungen des Notstromaggregats besitzen, ist vorgesehen, dass die jeweilige Steckvorrichtung 6 bzw. 16 einen als Gewindebolzen 21 ausgebildeten Abgang aufweist, der drehgesichert im zugeordneten Einspeisewinkel 4 bzw. 15 aufgenommen ist. Unter diesem Aspekt weist der jeweilige Einspeisewinkel 4 bzw. 15 im Bereich des Endes 7 ein Loch 22 auf, das mit einem unrunden Querschnitt versehen ist. Der Querschnitt des jeweiligen Gewindebolzens 21 ist entsprechend unrund ausgebildet, sodass bei durch das Loch 22 durchgestecktem Gewindebolzen 21 und dessen Verschrauben mittels einer nicht veranschaulichten Mutter, eine feste und ausgerichtete Verbindung von Steckvorrichtung 6 bzw. 16 und Einspeisewinkel 4 bzw. 15 gegeben ist.

Mit der jeweiligen Steckvorrichtung 6 bzw. 16 ist ein Mikroschalter 23 verbunden, wobei die Mikroschalter 23 über eine Leitung 24 in Reihe geschaltet sind. Über eine zweipolige Klemmleiste 25 werden die in Reihe geschalteten Mikroschalter 23 mit einem Auslöser eines Leistungsschalters verbunden, derart, dass bei Einstecken oder Herausziehen einer der Steckvorrichtungen unter Last der Leistungsschalter die Einrichtung 2 wegschaltet.

Der jeweilige Einspeisewinkel 4 bzw. 15 ist über eine Leitung 26 elektrisch leitend mit einer Synchronisationsbuchse 27 verbunden. An diese kann ein elektrisches Messgerät angeschlossen werden.

Die jeweils zweiteiligen Einspeisewinkel 4 bzw. 15 sind mittels zweier Schrauben 13 verschraubt. Die jeweils zusammengeschraubten Einspeisewinkel 4 bzw. 15 sind im Trägerteil 3 gelagert und mit diesem jeweils mittels Schrauben 30 verbunden. Die im Trägerteil 3 gelagerten Einspeisewinkel 4 werden dann mittels der Schrauben 28 mit den Sammelschienen 1 verbunden. Der Neutralleiter 32 wird mittels einer Schraube 33 mit dem Einspeisewinkel 15 verbunden.

Die Abdeckplatte 5 wird mit dem Trägerteil 3 mittels Schrauben 31 verschraubt. Die Steckvorrichtungen 6 bzw. 16 werden mit den Einspeisewinkeln 4 bzw. 15 verschraubt. Die Abdeckhauben 8 bzw. 17 werden mittels nicht veranschaulichten Schrauben mit der Abdeckplatte 5 verschraubt. Die Schrauben werden von der der Abdeckplatte 5 abgewandten Seite in die Abdeckhauben 8 bzw. 17 eingesetzt.

Zum Installieren der Einrichtung 2 ist es somit nur erforderlich, diese eine modulare Einheit bildende Einrichtung bezüglich der Sammelschienen 1 zu positionieren und mittels der Schrauben im Bereich der Einspeisewinkel 4 bzw. 15 mit den Sammelschienen 1 zu verbinden. Dann kann unmittelbar der elektrische Anschluss mit dem Notstromaggregat erfolgen, durch Einstecken der Stecker der Phasen L1, L2 und L3 des Notstromaggregats in die zugeordneten Steckbuchsen 6 der Einrichtung 2 und Einstecken der Steckbuchsen des Neutralleiters N in den Stecker 16 der Einrichtung 2.

### Bezugszeichenliste

- 1: Sammelschiene
- 2: Einrichtung
- 3: Trägerteil
- 4: Einspeisewinkel
- 5: Abdeckplatte
- 6: Steckvorrichtung / Steckbuchse
- 7: Ende
- 8: Abdeckhaube
- 9: Durchgang
- 10: Durchgang
- 11: Z-förmiger Abschnitt
- 12: Winkelabschnitt
- 13: Schraube
- 14: Durchgang
- 15: weiterer Einspeisewinkel
- 16: weitere Steckvorrichtung / Stecker
- 17: weitere Abdeckhaube
- 18: weiterer Durchgang
- 19: Öffnung
- 20: Öffnung
- 21: Gewindebolzen
- 22: Loch
- 23: Mikroschalter
- 24: Leitung
- 25: Klemmleiste
- 26: Leitung
- 27: Synchronisationsbuchse
- 28: Schraube
- 29: Loch
- 30: Schraube
- 31: Schraube
- 32: Neutralleiter
- 33: Schraube
- 34: Deckel

## Patentansprüche

1. Einrichtung (2) zum Einspeisen von Strom, insbesondere Notstrom, in ein elektrisches Sammelschienensystem (1, 1, 1), wobei die Einrichtung folgende Merkmale aufweist:
- ein Trägerteil (3),
- Einspeisewinkel (4), die mit Sammelschienen (1) des Sammelschienensystems (1, 1, 1) verbindbar sind, wobei die Einspeisewinkel (4) in dem Trägerteil (3) gelagert sind und dieses durchsetzen,
- eine Abdeckplatte (5), die mit dem Trägerteil (3) verbunden ist, zum Abdecken des Trägerteils (3) auf dessen den Sammelschienen (1) abgewandter Seite, **dadurch gekennzeichnet, dass** die Einrichtung folgende weitere Merkmale aufweist,
- einpolige Steckvorrichtungen (6), die mit den Einspeisewinkeln (4) im Bereich deren den Sammelschienen (1) abgewandten Enden (7), auf der dem Trägerteil (3) abgewandten Seite der Abdeckplatte (5), verbunden sind,
- Abdeckhauben (8) für die Steckvorrichtungen (6) und die Einspeisewinkel (4), wobei die Abdeckhauben (8) auf der dem Trägerteil (3) abgewandten Seite der Abdeckplatte (5) angeordnet und mit dieser verbunden sind,
- Durchgänge (9, 10) in der Abdeckplatte (5) und dem Trägerteil (3) zum Durchstecken von Befestigungsmitteln, die dem Verbinden von Einspeisewinkeln (4) und Sammelschienen (1) dienen,
wobei die Einspeisewinkel (4) die Abdeckplatte (5) durchsetzen.

2. Einrichtung nach Anspruch 1, wobei der jeweilige Einspeisewinkel (4) einen Z-förmigen Abschnitt (11) und einen Winkelabschnitt (12) aufweist, wobei der Z-förmige Abschnitt (11) einen diesem Einspeisewinkel (4) zugeordneten Durchgang (10) des Trägerteils (3) durchsetzt und der Z-förmige Abschnitt (11) und/oder der Winkelabschnitt (12) einen zugeordneten Durchgang (14) der Abdeckplatte (5) durchsetzt.

3. Einrichtung nach einem der Ansprüche 1 oder 2, wobei ein weiterer Einspeisewinkel (15) für einen Neutralleiter (32) in der Abdeckplatte (5) oder dem Trägerteil (3) gelagert ist, sowie mit dem weiteren Einspeisewinkel (15) eine weitere Steckvorrichtung (16) verbunden ist und eine weitere Abdeckhaube (17) die weitere Steckvorrichtung (16) und den weiteren Einspeisewinkel (15) abdeckt.

4. Einrichtung nach Anspruch 3, wobei der weitere Einspeisewinkel (15) einen weiteren Durchgang (18) der Abdeckplatte (5) durchsetzt.

5. Einrichtung nach Anspruch 3 oder 4, wobei die weitere Abdeckhaube (17) auf derselben Seite der Abdeckplatte (5) angeordnet ist, wie die den Sammelschienen (1) zugeordneten Abdeckhauben (8), sowie die weitere Abdeckhaube (17) mit der Abdeckplatte (5) verbunden ist.

6. Einrichtung nach einem der Ansprüche 1 bis 5, wobei die jeweilige einer Sammelschiene (1) zugeordnete Steckvorrichtung (6) als Steckbuchse (6) und/oder die dem Neutralleiter zugeordnete Steckvorrichtung (16) als Stecker (16) ausgebildet ist.

7. Einrichtung nach einem der Ansprüche 1 bis 5, wobei die jeweilige einer Sammelschiene (1) zugeordnete Steckvorrichtung (6) als Stecker und/oder die dem Neutralleiter zugeordnete Steckvorichtung (16) als Steckbuchse ausgebildet ist.

8. Einrichtung nach einem der Ansprüche 1 bis 7, wobei die jeweilige Abdeckhaube (8, 17) mittels eines Deckels (34), insbesondere mittels eines federvorgespannten Deckels, verschließbar ist.

9. Einrichtung nach einem der Ansprüche 1 bis 8, wobei die jeweilige Steckvorrichtung (6, 16) in Verbindung mit der jeweiligen Abdeckhaube (8, 17) und dem die jeweilige Abdeckhaube (8, 17) verschließenden Deckel (34) derart gestaltet ist, dass sie die Schutzart IP 44 erfüllt.

10. Einrichtung nach einem der Ansprüche 1 bis 9, wobei die jeweilige Steckvorrichtung (6, 16), , einen als Gewindebolzen (21) ausgebildeten Abgang aufweist, der drehgesichert von dem zugeordneten Einspeisewinkel (4, 15) aufgenommen ist, insbesondere alle Steckvorrichtungen (6, 16) in derselben Drehposition positioniert sind.

11. Einrichtung nach einem der Ansprüche 1 bis 10, wobei die jeweilige Abdeckhaube (8, 17) zwei Öffnungen (19, 20) aufweist, wobei die eine Öffnung (20), bei Verbindung der Abdeckhaube (8, 17) mit der Abdeckplatte (5), umlaufend mittels der Abdeckplatte (5) abgedeckt ist, und die Steckvorrichtung (6, 16) den lichten Querschnitt der anderen Öffnung (19) durchsetzt.

12. Einrichtung nach einem der Ansprüche 1 bis 11, wobei die jeweilige Abdeckhaube (8, 17) mit dieser zugeordneter Steckvorrichtung (6, 16) als Wandsteckdose ausgebildet ist, insbesondere als Wandsteckdose mit federvorgespannten Verschlussdeckel ausgebildet ist.

13. Einrichtung nach einem der Ansprüche 1 bis 12, ferner aufweisend Mikroschalter (23) und einen Leistungsschalter, wobei mit der jeweiligen Steckvorrichtung (6, 16) ein Mikroschalter (23) verbunden ist, wobei die Mikroschalter (23) in Reihe geschaltet und mit einem Auslöser des Leistungsschalters verbunden sind, derart, dass bei Einstecken oder Herausziehen einer der Steckvorrichtungen (6, 16) unter Last der Leistungsschalter die Einrichtung (2) zum Einspeisen von Strom wegschaltet.

14. Einrichtung nach einem der Ansprüche 1 bis 13, ferner aufweisend Synchronisationsbuchsen (27), wobei der jeweilige Einspeisewinkel (4, 15) elektrisch leitend mit einer Synchronisationsbuchse (27) verbunden ist, zum Anschluss an ein elektrisches Messgerät.

## Claims

1. Device (2) for feeding current, in particular emergency current, into an electrical busbar system (1, 1, 1), wherein the device has the following features:
- a carrier part (3),
- infeed brackets (4) which can be connected to busbars (1) of the busbar system (1, 1, 1), wherein the infeed brackets (4) are mounted in the carrier part (3) and pass through the said carrier part,
- a covering plate (5), which is connected to the carrier part (3), for covering the carrier part (3) on its side which is averted from the busbars (1), **characterized in that** the device has the following further features:
- single-pole plug-in apparatuses (6) which are connected to the infeed brackets (4) in the region of the ends (7) of the said infeed brackets that are averted from the busbars (1) on that side of the covering plate (5) that is averted from the carrier part (3),
- covering hoods (8) for the plug-in apparatuses (6) and the infeed brackets (4), wherein the covering hoods (8) are arranged on that side of the covering plate (5) that is averted from the carrier part (3) and are connected to the said covering plate,
- passages (9, 10) in the covering plate (5) and the carrier part (3) for fastening means to pass through, which fastening means serve to connect infeed brackets (4) and busbars (1),
wherein the infeed brackets (4) pass through the covering plate (5).

2. Device according to Claim 1, wherein the respective infeed bracket (4) has a Z-shaped section (11) and an angled section (12), wherein the Z-shaped section (11) passes through a passage (10) of the carrier part (3), which passage is associated with the said infeed bracket (4), and the Z-shaped section (11) and/or the angled section (12) pass/passes through an associated passage (14) of the covering plate (5).

3. Device according to either one of Claims 1 and 2, wherein a further infeed bracket (15) for a neutral conductor (32) is mounted in the covering plate (5) or the carrier part (3), and also a further plug-in apparatus (16) is connected to the further infeed bracket (15) and a further covering hood (17) covers the further plug-in apparatus (16) and the further infeed bracket (15).

4. Device according to Claim 3, wherein the further infeed bracket (15) passes through a further passage (18) of the covering plate (5).

5. Device according to Claim 3 or 4, wherein the further covering hood (17) is arranged on the same side of the covering plate (5) as the covering hoods (8) which are associated with the busbars (1), and also the further covering hood (17) is connected to the covering plate (5).

6. Device according to one of Claims 1 to 5, wherein the respective plug-in apparatus (6) which is associated with a busbar (1) is embodied as a socket (6) and/or the plug-in apparatus (16) which is associated with the neutral conductor is embodied as a plug (16).

7. Device according to one of Claims 1 to 5, wherein the respective plug-in apparatus (6) which is associated with a busbar (1) is embodied as a plug and/or the plug-in apparatus (16) which is associated with the neutral conductor is embodied as a socket.

8. Device according to one of Claims 1 to 7, wherein the respective covering hood (8, 17) can be closed by means of a cover (34), in particular by means of a spring-prestressed cover.

9. Device according to one of Claims 1 to 8, wherein the respective plug-in apparatus (6, 16) is connected to the respective covering hood (8, 17) and the cover (34), which closes the respective covering hood (8, 17), in such a way that it meets the requirements of protection class IP 44.

10. Device according to one of Claims 1 to 9, wherein the respective plug-in apparatus (6, 16) has an outlet which is embodied as a threaded bolt (21) and is held in a rotationally secured manner by the associated infeed bracket (4, 15), in particular all plug-in apparatuses (6, 16) are positioned in the same rotation position.

11. Device according to one of Claims 1 to 10, wherein the respective covering hood (8, 17) has two openings (19, 20), wherein one opening (20), when the covering hood (8, 17) is connected to the covering plate (5), is covered circumferentially by means of the covering plate (5), and the plug-in apparatus (6, 16) passes through the clear cross section of the other opening (19) .

12. Device according to one of Claims 1 to 11, wherein the respective covering hood (8, 17) with this associated plug-in apparatus (6, 16) is embodied as a wall socket, in particular as a wall socket with a spring-prestressed closing cover.

13. Device according to one of Claims 1 to 12, further having microswitches (23) and a circuit breaker, wherein a microswitch (23) is connected to the respective plug-in apparatus (6, 16), wherein the microswitches (23) are connected in series and are connected to a release of the circuit breaker in such a way that, when one of the plug-in apparatuses (6, 16) is plugged in or removed under load, the circuit breaker disconnects the device (2) for feeding-in current.

14. Device according to one of Claims 1 to 13, further having synchronization sockets (27), wherein the respective infeed bracket (4, 15) is electrically conductively connected to a synchronization socket (27), for connection to an electrical measuring device.

## Revendications

1. Dispositif (2) d'injection de courant, en particulier de courant de secours, dans un système électrique de barres omnibus (1, 1, 1), dans lequel le dispositif présente les caractéristiques suivantes :
- une partie support (3),
- des cornières d'injection (4) qui peuvent être reliées aux barres omnibus (1) du système de barres omnibus (1, 1, 1), dans lequel le cornières d'injection (4) sont disposées dans la partie support (3) et passent à travers celle-ci,
- une plaque de recouvrement (5), qui est reliée à la partie support (3), pour recouvrir la partie support (3) sur sa face qui est tournée à l'opposé des barres omnibus (1), **caractérisé en ce que** le dispositif présente les caractéristiques supplémentaires suivantes :
- des dispositifs enfichables unipolaires (6) qui sont reliés aux cornières d'injection (4) dans la zone de leurs extrémités (7) tournées à l'opposé des barres omnibus (1), sur la face de la plaque de recouvrement (5) qui est tournée à l'opposé de la partie support (3),
- des capots de protection (8) destinés aux dispositifs enfichables (6) et aux cornières d'injection (4), dans lequel les capots de protection (8) sont disposés sur la face de la plaque de recouvrement (5) qui est tournée à l'opposé de la partie support (3) et sont reliés à celle-ci,
- des traversées (9, 10) ménagées dans la plaque de recouvrement (5) et la partie support (3) pour l'insertion de moyens de fixation servant à relier les cornières d'injection (4) et les barres omnibus (1), dans lequel les cornières d'injection (4) traversent la plaque de recouvrement (5).

2. Dispositif selon la revendication 1, dans lequel la cornière d'injection (4) respective présente une partie en forme de Z (11) et une partie en angle (12), dans lequel la partie en forme de Z (11) traverse un passage (10) de la partie support (3) associée à ladite cornière d'injection (4) et la partie en forme de Z (11) et/ou la partie en angle (12) passe par une traversée (14) associée de la plaque de recouvrement (5) .

3. Dispositif selon l'une des revendications 1 ou 2, dans lequel une autre cornière d'injection (15) destinée à un conducteur neutre (32) est montée dans la plaque de recouvrement (5) ou la partie support (3), et un autre dispositif enfichable (16) est relié à l'autre cornière d'injection (15) et un autre capot de protection (17) recouvre l'autre dispositif enfichable (16) et l'autre cornière d'injection (15).

4. Dispositif selon la revendication 3, dans lequel l'autre cornière d'injection (15) passe à travers un autre passage (18) de la plaque de recouvrement (5).

5. Dispositif selon la revendication 3 ou 4, dans lequel l'autre capot de protection (17) est disposé du même côté de la plaque de recouvrement (5) que les capots de protection (8) associés aux barres omnibus (1), et l'autre capot (17) est relié à la plaque de recouvrement (5).

6. Dispositif selon l'une des revendications 1 à 5, dans lequel le dispositif enfichable (6) respectif associé à une barre omnibus (1) est réalisé sous la forme d'une douille (6) et/ou le dispositif enfichable (16) associé au conducteur neutre est réalisé sous la forme d'une fiche (16).

7. Dispositif selon l'une des revendications 1 à 5, dans lequel le dispositif enfichable (6) respectif associé à une barre omnibus (1) est réalisé sous la forme d'une fiche et/ou le dispositif enfichable (16) associé au conducteur neutre est réalisé sous la forme d'une douille.

8. Dispositif selon l'une des revendications 1 à 7, dans lequel le capot de protection (8, 17) respectif peut être fermé au moyen d'un couvercle (34), en particulier au moyen d'un couvercle à ressort.

9. Dispositif selon l'une des revendications 1 à 8, dans lequel le dispositif enfichable (6, 16) respectif est conçu en liaison avec le capot de protection (8, 17) respectif et avec le couvercle (34) fermant le capot de protection (8, 17) respectif de manière à ce qu'il soit conforme au type de protection IP 44.

10. Dispositif selon l'une des revendications 1 à 9, dans lequel le dispositif enfichable respectif (6, 16) comporte une sortie qui est réalisée sous la forme d'un boulon fileté (21) et qui est reçue de manière solidaire en rotation par la cornière d'injection (4, 15) associée, tous les dispositifs enfichables (6, 16) étant en particulier positionnés à la même position de rotation.

11. Dispositif selon l'une des revendications 1 à 10, dans lequel le capot respectif (8, 17) comporte deux ouvertures (19, 20), dans lequel ladite ouverture (20) est recouverte circonférentiellement au moyen de la plaque de recouvrement (5) lorsque le capot de protection (8, 17) est relié à la plaque de recouvrement (5), et le dispositif enfichable (6, 16) passe à travers la section transversale libre de l'autre ouverture (19).

12. Dispositif selon l'une des revendications 1 à 11, dans lequel le capot de protection (8, 17) respectif, avec ledit dispositif enfichable (6, 16) qui lui est associé, est réalisé sous la forme d'une prise murale, en particulier sous la forme d'une prise de courant munie d'un couvercle de fermeture à ressort.

13. Dispositif selon l'une des revendications 1 à 12, comportant en outre un micro-interrupteur (23) et un disjoncteur, dans lequel un micro-interrupteur (23) est relié au dispositif enfichable (6, 16) respectif, dans lequel les micro-interrupteurs (23) sont montés en série et reliés à un déclencheur du disjoncteur de manière à ce que, lorsque l'un des dispositifs enfichables (6, 16) est inséré ou retiré sous charge, le disjoncteur déconnecte le dispositif (2) d'injection de courant.

14. Dispositif selon l'une des revendications 1 à 13 comprenant en outre des prises de synchronisation (27), dans lequel la cornière d'injection (4, 15) respective est reliée de manière électriquement conductrice à une prise de synchronisation (27) pour le raccordement à un appareil de mesure électrique.
